# EUROPEAN PATENT SPECIFICATION

(11) **EP 3 172 808 B1**
(45) Date of publication and mention of the grant of the patent: **24.07.2019**
(21) Application number: 14742535.9
(22) Date of filing: 25.07.2014
(51) Int. Cl.: H02G 9/02

(54) **HIGH VOLTAGE POWER TRANSMISSION LINE**
HOCHSPANNUNGSENERGIEÜBERTRAGUNGSLEITUNG
LIGNE DE TRANSPORT D'ÉLECTRICITÉ HAUTE TENSION (HT)

(43) Date of publication of application: 31.05.2017
(73) Proprietor: ABB Schweiz AG, 5400 Baden (CH)
(72) Inventor: KAUFMANN, Patrik, CH-5400 Baden (CH); LOGAKIS, Emmanuel, CH-5405 Baden-Dättwil (CH); ROCKS, Jens, CH-8807 Freienbach (CH)
(74) Representative: ABB Patent Attorneys
(86) International application number: PCT/EP2014/066003
(87) International publication number: WO 2016/012049

(56) References cited:
- US-A- 3 202 754
- US-A- 3 856 979
- US-A- 3 949 153
- US-A- 4 571 450
- US-A1- 2011 041 944
- US-A1- 2011 041 944

## Description

### Technical Field

The present invention relates to a high voltage power transmission line for a continuous power transmission comprising a plurality of elongated conductor segments placed alongside one another to form an inner electrical conductor of a high voltage power transmission line, and an elongated tubular electric insulation device arranged to house and surround the inner electrical nominal conductor segments.

A conductor segment is to be understood as a nominal conductor segment which can be electrically connected to a neighboring conductor segment in a direction of a longitudinal axis defined by the tubular overall shape of the high voltage power transmission line, and which together with other alongside extending conductor segments form the conductor. The term conductor segment and the term power transmission line segment are understood as longitudinal portions of the overall nominal conductor and the overall power transmission line, respectively.

### Background of the Invention

The development of technologies for long distance power transmission or distribution is in general driven by the need of connecting remote renewable power generation facilities, e.g. large solar parks, several connected wind parks or large hydropower plants, to large load centers. In addition, there is an industry trend of interconnecting different electric power systems. In prior art, electric power transmission for capacities above 3 GW is in general limited to overhead lines as the only economically affordable option. However, high, or extra high, voltage overhead transmission lines cause visual, electric and magnetic pollution where they pass close to/inside densely populated areas. Further, overhead transmission lines require a large corridor and thus require land for installation, which is problematic in densely populated areas, where the price of the land is high and thus generates costs. Thus, using underground and submarine power cables for electric power transmission is an attractive alternative, as the cables do not require any pylons and are installed as underground cables and are thus not visible. However, scaling-up underground and subsea power cables, in order to increase the transmission of electric power, is limited due to limits of inner conductor size and cable insulation thickness. The electric power transmitted in a high capacity transmission system can be increased by increasing the voltage or the current. Higher voltages, without increasing the electric field, require an increase of the thickness of the electric power cable insulation. Achieving higher currents, without increasing the thermal load on the cable insulation, require an increase of the cross-section area of the electric power cable's inner electrical conductor or require a material with higher conductivity for the inner electrical conductor.

The inventors of the present invention have identified that the factor that limits the scale-up of prior art power cable technology is the fact that the cross-section area of a prior art power cable cannot be increased without sacrificing overall flexibility of the power cable, which in turn results in that the length of a conventionally produced power cable segment has to be reduced for the said transmission capacity, as the inflexibility of the conventional power cable with the increased cross-section area allowing for higher currents makes it too difficult to transport, or prevents the transportation of, too long power cable segments from the production site to the site of installation. In general, electric power cables may be produced by way of extrusion in a cable extrusion line, and it is desirable to produce the extruded power cable segments as long as possible to keep the number of joints on the site of installation to a minimum. A reduction of the length of the power cable segments results in an increase of the number of joints for joining the power cable segments in order to install the entire power transmission line. Therefore, the installation time is prolonged, and the long-term electric reliability of the power transmission or distribution system in operation decreases with an increase of the number of joints.

US 5,043,538 describes a water impervious cable construction which includes a central electrical conductor, an overlayer of insulation material such as a plastic, a shield layer formed of a plurality of individual conductors, the shield layer being embedded in a layer of semiconducting material, a layer of overlapped moisture barrier metal foil material, and a further overlayer of insulating material.

WO 02/27734 discloses an electrical cabling system for the transmission of power over distances. The cabling system includes a set of extruded aluminium tube conductors.

US 4,298,058 describes a moisture-proofing electrical cable comprising three stranded-together insulated conductors enveloped in a rubber-elastic inner sleeve on which sits a corrugated twin tube arrangement of an inner copper tube and an outer steel tube.

US 7,999,188-B2 discloses a cable for transporting or distributing electric energy, especially medium or high voltage electric energy, including an electrically insulating layer surrounding an electrical conductor, and a sheath surrounding the electrically insulating layer. It is disclosed that the sheath is configured to guarantee improved flexibility without impairing mechanical properties and particularly thermopressure resistance.

EP1585204 discloses a cable arrangement for AC transmission where an installation duct houses the cables for three phases. Each phase cable has its own insulation. The installation duct consists of an inner screen of metal that is thick enough to ensure grounding. The cable is assembled on site, whereby the installation duct attains is circular shape from a planar band when rolled around the phase cables and welding the band sides together. The transportation is facilitated since the duct-to-be can be wound as a band.

US3949153A relates to a high voltage power transmission line having an electrical power carrying capacity of fifty megawatts or more. It promotes utilizing a dielectric glass casing as the primary insulation for an electrical conductor. This document further discloses that the inner and outer surfaces of the casing have semi conductive layers or coatings for bringing this surface to a potential substantially equaling that of the electrical conductor or for forming a barrier to suppress the diffusion of metals of the conductor into the glass casing under the influence of the electric field present under operating conditions.

US3856979A a tubular glass conduit for loosely containing and electrically insulating an electrical power conductor in an underground power transmission network The internal surface of the tubular glass conduit is provided with a semi conductive coating of tin oxide or titanium oxide to provide abrasion resistance, corona discharge protection, as well as inhibiting the tendency for ionic migration from the charged conductor to the glass conduit. US3202754 discloses an electrical system and in particular a transmission system for electric power.

### Summary of the Invention

The object of the present invention is to promote a high voltage transmission line allowing for a more compact and economic power transmission compared to a conventional power cable, especially a power cable for submarine/subsea installation or for installation on land, e.g. an underground cable, without any reduction of the length of the produced power transmission line segments with regard to limitations of the transportation of the power transmission line.

The above mentioned object of the present invention is attained in that a tubular electrical insulation device has particular features such as described below which allows it to be transported to the installation site of the high voltage power transmission line independently of the nominal conductor segments. Thus the tubular electric insulation device is designed for receiving a plurality of electrical conductors segments by insertion, which tubular electrical insulation device is flexible and comprises an inner circumferential electrically conductive layer for establishing an electric contact to the electrical conductors once inserted into the tubular electrical insulation device.

The term 'high voltage' shall be understood hereinafter as a rated or nominal voltage of more than at least 1kV in an operating state of the power transmission line although the term 'high voltage' is frequently used for a nominal voltage above 50kV whereas the term 'medium voltage' is frequently used for a nominal voltage between 1kV and 50kV.

The present invention is particularly economic for high voltage power transmission lines having a nominal voltage for economic high voltage power transmission lines is understood to be of at least 320kV.

The term 'high voltage power transmission line' shall not be understood to be limited to a power transmission line that can provide a durable and reliable electric insulation from live potential applied to its interior surface to ground potential applied to its exterior surface, for example but also to encompass power transmission lines carrying high currents such as 5000 Amperes, for example.

The term 'power transmission' shall be understood as the ability to transport electric AC and DC power permanently, i.e. over a comparatively long period of time and not just instantaneously, over a short period of time, e.g. for discharging a lightning stroke, a fault current or the like.

The term 'flexible' is to be understood hereinafter as 'bendable' and not in terms of a versatile use of the tubular electrical insulation device and/or the high voltage power transmission line. Hence, the term flexible is employed to describe a flexibility in any plane through the center line of the insulation device, also referred to as longitudinal axis. In other words, the flexibility allows the insulation device to be bent. Generally the insulation device according to the invention can be bent with a bending ratio in the range of 4 to 25, typically in the range between 9 and 15. The bendability is measured as the relation between the diameter of the insulation device and the possible bending radius. The possible bending radius corresponds to the radius to which the insulation device can be bent without using excessive force for wounding at that radius without significant deformation, cracks or other defects.

According to the invention the insulation device is an entity that is separate from the nominal, uninsulated conductor segment, and into which the uninsulated conductor segment can be inserted to form a power transmission line.

By the invented insulation device it will be possible to attain a power transmission line that allows much higher power rating than can be achieved with a conventional cable without resulting in undue short cable segments. For transmitting electrical power in the magnitude above 1 GW with conventional cable technique it requires either to increase the voltage to a level that creates problems of the kind discussed above or to use a plurality of cables in parallel. The alternative to have a "moderate" high voltage such as 320 kV and use one single cable would result in such a high conductor area that a conventional cable could not be bent to be transported on a drum. The consequence would be very short cable segments and a large number of joints. With a power transmission line provided with an insulation device according to the invention this is avoided.

The principles of the present invention can be summarized as:
- allowing for an increase of the nominal rating by increasing the conducting cross sectional area and keeping the high voltage "moderate",
- to separate the solid insulation tube from the conductor strand,
- thereby achieving long segments, and
- thereby reducing the number of joints per transmitted GW/km.

The bending properties of a power transmission line formed with the use of the insulation device allow transportation of the assembled power transmission line rolled on a drum and with a segment length of some hundred meters.

The specific construction of the insulation device also makes it possible to alternatively assemble the power transmission line on site whereby the conductor segments and the

Insulation device are transported individually to the site. Thereby the individual unassembled parts transport is lighter, and the transport weight limitation (e.g. 32 tons for road transport) is reached at much longer segment length.

If for example a power of 3 GW is to be transmitted with conventional cable technique at a voltage of 320 kV it would require five cables in parallel in order to obtain the sufficient conductive area without the cables being too stiff to be bended for transportation.

With a high voltage power transmission system having an insulation device according to the invention only one single high voltage power transmission line is required and which can be transported assembled with a transmission line segment length of above 300 meters. The total weight of such a sector will be about 32 t and can be transported on one truck.

When transporting the insulation device according to the present invention unassembled with the conductor segments that are to be inserted, the insulation device segments can be increased to almost 700 meters in this example, since in that case it is the weight of the insulation device alone that has to match the weight limitation.

The power transmission line that can be provided with the invented insulation device in this example replaces five conventional cables. This results in that the production costs will be reduced as well as the required space for the cable trench.

According to the invention the insulation device, it is that flexible that it can be coiled on a drum for transportation.

This criterion represents a well-defined degree of the flexibility with reference to the maximum conventional size of standard cable transportation drums. This degree of flexibility assures that the beneficial effects of the invented insulation device are taken advantage of with regards to essential aspects.

The present high voltage power transmission line may not only be used for establishing long distance connections between a point A and a point B and thus form an economic advantageous alternative to a plurality of common high voltage cables provided parallel to one another but also for establishing comparatively short distance connections from a first portion of a gas insulated substation to a second portion of a gas insulated substation, e.g. for electrically connecting two portions of a retrofitted substations extending on both sides of a motorway or over different caverns or different basements in an existing building. The present high voltage power transmission line forms thus an economically attractive alternative to so-called gas insulated lines (GIL) also known as gas insulated bus ducts (GIB).

In an exemplary use the present high voltage power transmission line may be employed for replacing a GIL or a GIB. Gas insulated lines (GIL) or gas insulated bus ducts (GIB) are commonly used to connect gas insulated switchgear with overhead lines, typically routed overground and over hundreds of meters leading to a large & pressurized volume of SF₆ insulation gas mixture. The most common voltage level for higher voltages is 420kV AC and at least 4000 Amperes. Sulfur hexafluoride (SF₆) is an extremely potent greenhouse gas, and thus subject to increased regulations and bans. Thus an increasing number of grid-operators is demanding for alternative insulation solutions. Replacing a GIL/GIB with conventional extruded cables is not economic for most cases as one single GIL/GIB would need to be replaced with several cables that are installed in parallel to one another.

An advantage of using a bendable and thus flexible high voltage power transmission line according to the present application resides in that such a power connection can be established also in situations where there would be insufficient space available for establishing a conventional bus duct, for example in case of an uprating of an existing substation or switchyard.

A further advantage of a bendable and thus flexible high voltage power transmission line according to the present application compared to gas insulated bus ducts resides in that no compensators for balancing thermal expansions are required.

Furthermore the high voltage power transmission line according to all embodiments disclosed in the present application is more advantageous than common gas insulated bus ducts because it is SF₆ free, it is way easier to install (more tolerant in view of orientation and location tolerances), it is way quicker to install and to maintain (no gas evacuation and gas monitoring required). All this advantages allow for lowering the overall costs for establishing a short distance connection with the high voltage power transmission line according to the present application compared to a common gas insulated bus duct.

Although the above-mentioned embodiments are directed to a nominal high voltage application of several hundred kilovolts the same concept is applicable likewise to much lower voltages, if the length of the power transmission line segment shall be increased and the number of joints shall be decreased.

Such a tubular electrical insulation device allows for establishing a high voltage power transmission line comprising at least two tubular electrical insulation devices, at least one nominal, uninsulated conductor segment provided in each of the at least two tubular electrical insulation devices, and a joint for jointing, i.e. electrically connecting the conductor segments and electrically insulating the ends of two neighboring tubular electrical insulation devices in a radial direction with respect to a longitudinal axis. For forming an independent system the high voltage power transmission line further comprises at least one power termination for connecting the at least one nominal conductor segment to an electrical connection such as an overhead line or a gas insulated module, for example. The joints can be prefabricated joints in the case of land installations and flexible or so-called factory joints in the case of subsea installations. In an exemplary embodiment, the power terminations can be bushings to connect with adjacent overhead lines and cable connections to a gas insulated module such as a GIS. The joints and the terminations are achievable by scaling up known cable joints or oil-free cable terminations.

As mentioned above the high voltage power transmission line is peculiar compared to conventional high voltage power cables in that the at least one electrically conductor segment is electrically uninsulated, and in that the tubular electrical insulation device is flexible in terms of bendability. The tubular electrical insulation device comprises further an inner circumferential electrically conductive layer at its inner wall surface and is of such insulation quality that it can electrically insulate the at least one electrically uninsulated conductor segment from the exterior of the tubular electrical insulator once inserted into the tubular electrical insulation device. Once the at least one electrically uninsulated conductor segment is inserted into the tubular electrical insulation devices they are touching the inner circumferential electrically conductive layer at the inner wall surface of the tubular electrical insulation device. As a result, the inner circumferential electrically conductive layer is on the same electric potential as the at least one electrically uninsulated conductor segment in an operating state of the high voltage power transmission line each such that an optimal shielding and homogenization of the electric field is achievable.

An advantage of said high voltage power transmission line resides in that offers an upgrade functionality where additional electrically uninsulated conductor segments can be inserted later on as long as the inner diameter of the insulating hose is initially oversized and as long as the fill-ratio of the existing conductor segments allows it. For upgrading, the SIL remains in its location and along the routing (e.g. buried underground or installed inside a tunnel). Only the joints/terminations would need modifications e.g. replaced by a larger type.

A further advantage resides in that it becomes an economic solution for establishing sub-sea connections to offshore wind farms, including communication channels offering a broad functionality including data communication together with a large power transmission capacity.

According to the invention, the inner circumferential electrically conductive layer is dimensionally stable such that its ring-shaped cross-section is maintained when coiled on the drum for transportation without the nominal conductor segments inserted in its interior.

By in this way avoiding any deformation of the cross-section of the insulation device during transport secures a proper condition of the insulation device when it is to be assembled at the assembly site and eliminates any need to reshape-squeeze it at the site for facilitating the insertion of the conductor segments.

According to a further embodiment, the electrical insulation device is that flexible that its bending radius is in a range of 4 to 20 times the outer diameter of the tubular electrical insulation device.

Preferably that range is 4 to 10 times in case of a land installation where the transmission line is buried in ground such as a conventional power cable. The high voltage power transmission line may have a bendability that is such that it can be used as a high voltage power transmission cable.

The specified range for the bending radius, in particular the narrow range, represents a bending property that is optimized for the purpose of the present invention in consideration on one hand the transport aspect and on the other hand other practical aspects such as the stability. It is to be understood that the term bending radius in this context means the radius to which the insulation device can be bent without using excessive force or injuring the insulation device.

According to the invention, the inner circumferential electrically conductive layer of the tubular electrical insulation device is a corrugated tube or a strip wound tube.

This is a particular suitable and convenient way of attaining the flexibility of the inner layer.

The present high voltage power transmission line will further comprise at least one circumferentially extending electrical insulator layer located radially outside of the electrically conductive inner layer with respect to a longitudinal axis, and a circumferentially extending electrically conductive outer layer located radially outside of the at least one circumferential electrical insulator layer.

The circumferential electrical insulator layer surrounds the electrically conductive inner layer, and the circumferential electrically conductive outer layer surrounds the at least one circumferential electrical insulator.

According to a further embodiment, the tubular electrical insulation device is produced by extrusion. Typically, it is thus seamless in a longitudinal direction defined by the overall tubular shape of the tubular electrical insulation device. Moreover the extrusion process provides for a homogeneous formation of the electrical insulation.

If the number of impurities such as dust particles, for example, in between the electrical insulator layer and the electrically conductive inner layer as well as in between the electrical insulator layer and the electrically conductive outer layer shall be reduced the electrical insulator layer and the electrically conductive outer layer may be co-extruded onto the electrically conductive inner layer.

By means of such an exemplary embodiment, a flexible and efficient power transmission line system is provided, which is suitable for the inventive concept provided by the present invention, i.e. the transportation of the power transmission line members unassembled and the assembly of the power transmission line members on site. By means of this embodiment, the electric field generated by the current-carrying inner electrical conductor can be efficiently controlled and well defined. The at least one circumferential electrical insulator layer may comprise one or a plurality of circumferential electrical insulators. At least one of the electrically conductive inner and outer layers may be semiconductive. Outside the outer conductive layer other circumferential layers may be added e.g. as environmental protection.

According to a further embodiment, each of the electrically conductive inner and outer layers is made of a metal composition, or made of an electrically conductive polymer or polymer composition. If the outer layer is made of metal a co-extrusion along with the electrical insulator layer is not possible.

According to a further embodiment, the electrically conductive inner and outer layers are arranged to form a protective barrier protecting the at least one circumferential electric insulator from moisture and mechanical abrasion.

This embodiment is suitable for the inventive concept provided by the present invention, where the power transmission line is assembled on site, as the electrical insulator of the electrical insulation device is protected both at the inside and at the outside during the transportation of the electrical insulation device and the plurality of elongated electrical conductor segments unassembled. Further, during the assembly of the electrical insulation device and the plurality of elongated electrical conductor segments, the electrical insulator of the electrical insulation device is also protected from any mechanical abrasion effected by the plurality of elongated electrical conductor segments. By means of this embodiment, a flexible and efficient power transmission line insulation system is provided.

If required, at least one of the electrically conductive inner and outer layers is covered on the outside and/or on the inside with a semiconductive material.

In some embodiments of the tubular insulation device both of the layers are covered. With a semiconductive material in this context is meant a semiconductive material following the definition that it has low electrical conductivity but on the other hand conducts electricity better than an insulating material.

According to the invention, the electrical insulation capacity is such that it can be used in a high voltage power transmission line. The invention is particularly of interest for ultra-high voltage such as voltage levels at 320 kV and above. Preferably the thickness of the insulation layer is larger than 30 mm. In particular the layer is at least 60 mm thick, which is suitable for ultra-high voltage applications.

According to a further preferred embodiment, the inner layer has an internal diameter of at least 80 mm, preferably at least 120 mm.

The large internal diameter allows to house conductor segments of a total conductive cross sectional area little less than 5000 mm² at a fill-ratio of about 70% or more. The internal diameter may vary in the longitudinal direction, e. g. when the inner layer is a corrugated tube. In that case the term "internal diameter" relates to the minimum appearing internal diameter. The term fill-ratio is defined further below.

If required the plurality of conductor segments may be bundled together, e.g. by tape, wire or the like in order to simplify insertion of the conductor segments into the insulation device.

In some embodiments of the high voltage power transmission line, the at least one conductor segment of the conductor is in electrical contact with at least another along-side extending conductor segment of the conductor.

Although, the invention may be applied also when the power transmission line contains conductor segments that are insulated from each other, the advantages of the invention are of primary interest when the conductor segments are in electrical contact with each other to form a common conductor, in particular when all conductor segments are in electrical contact with each other.

The embodiments mentioned next above have advantages of similar kind as the embodiments of the invented tubular electrical insulation device that relate to the bending properties thereof. The clarifications regarding what is meant by flexible and by bending radius is presented above in connection with the insulation device, and these are relevant also to the power transmission line. Typically the bending radius of the conductor segments will be in a range of about 5 to 25 times, and 5 to 12,5 times, respectively, of the outer diameter of the tubular electrical insulation device.

According to a further embodiment, the plurality of elongated electrical conductor segments is at least partly loosely arranged in relation to the insulation device such that electrical conductor segments can move relative to the insulation device when the high voltage power transmission line is bent. The term 'loosely arranged' is understand such that the conductor segments are not fixed or attached to the inner periphery of the insulation device as is the case with a conventional extruded cable. This, however, does not exclude that the conductor segments are in contact with the inner periphery of the insulation device. The conductor parts may be loosely arranged along the entire length but may alternatively be attached to the inner periphery of the insulation device at certain spots along the power transmission line.

According to a further preferred embodiment, the number of along-side extending conductor segments of the conductor is at least four.

The larger the number of conductor segments is, the more the benefits regarding to achieve high bendability is for a given total conductor cross sectional area. From this point of view it is therefore advantageous to have multiple conductor segments, such as four or more. Other considerations may give reasons to limit the number of conductor segments. However, in most cases the bendability of the insulation device is the limiting factor, whereby normally a low number of conductor sectors is sufficient with respect to the bendability criterion.

For high voltage applications with a nominal voltage of several hundred kilovolts, the conductive cross sectional area of the conductor is at least 3000 mm², preferably at least 5000 mm². This is the sum of the conductive cross sectional areas of the conductor segments. As is supposed to be understood, the benefits of the present invention is larger, the larger the power is and thus the larger the conductive cross sectional area is for a given voltage. This is why it is preferred to apply the invention for cross sections above the specified. The advantages are most pertinent when the conductive cross sectional area is above 10000 mm² and in particular above 20000 mm². The invention may be applied for conductive cross sectional areas up to twice and even five times that figure.

In order to allow the assembly of the power transmission line, either before transportation or at the site, there should be a certain excess space within the insulation device such that the conductor segments can be inserted. The more excess space, the easier the insertion will be. On the other hand it is of interest to attain a sufficient fill-ratio so as to minimize the diameter of the insulation device for a given conductive cross sectional area. The specified minimum value for the excess cross sectional area in most cases will make the insertion of the conductor segments easy. For various reasons the fill-ratio will normally be lower than the 90 % that corresponds to the specified minimum value of the cross sectional excess area. A fill-ratio of 30 % or even 20 % may be applied, with a corresponding higher figure for the excess cross sectional area. Preferably, when taking various aspects into consideration, the excess cross sectional area is in the range of 20 to 50 %. The fill-ratio is the ratio between the cross sectional area of the conductor and the internal cross sectional area of the insulation device. A fill-ratio of e.g. 30% thus means an excess cross sectional area of 70%. In case the inner layer has a diameter varying in the longitudinal direction such as is the case for a corrugated tube, the internal cross sectional area of the insulation device is related to the minimum appearing diameter.

If the tubular electrical insulation device shall serve also as a carrier for transmitting signals it can further comprise an additional conductor line provided radially outside of the second conductive layer with respect to the longitudinal axis. An advantage of such an embodiment resides in that no separate signal line needs to be laid along with the power transmission line. Depending on the intended use the additional conductor line can be a signal wire or an optical fiber intended for monitoring the insulator joints or for allowing communication together with bulk power transmission in one go.

If required for some reason it is also possible to provide the additional conductor line between the inner circumferential electrically conductive layer and the inner wall surface. In an exemplary embodiment, the additional conductor line is embedded in between the inner circumferential electrically conductive layer and the carrier tube. In a further embodiment the additional conductor line is embedded in between the electrical insulator layer and the outer circumferential electrically conductive layer. Although such embodiment are presently regarded as technically less favorable as the additional conductor line is less shielded against the electrical field from the uninsulated electrical of conductor segments in a radial direction with respect to the longitudinal axis than in an embodiment where the additional conductor line is arranged radially outside the electrically conductive outer layer, such an embodiment may still suffice for establishing a reliable communication line used for monitoring the high voltage transmission line and/or elements thereof, for example.

The high voltage transmission line according to the present invention can be conferred with an additional functionality in that it further comprises an auxiliary conductor for transmitting signals, wherein the auxiliary conductor is inserted into the tubular electrical insulator, too. Since a typical fill-factor is expected to far less than a 100% there is some space left for optionally include additional functionality inside of the insulating tube. Optical fibres as an exemplary embodiment of an auxiliary conductor can be laid alongside the nominal conductor segments. That auxiliary conductor may be used for monitoring the temperature along the axial direction, for detecting partial discharges, or for observe any changes in the moisture content of the power transmission line. The electrical insulator tube is suitable for sheltering additional lines, e.g. auxiliary lines/conductors made from reinforced glass fibres for communication purpose. Alternatively, the auxiliary conductor may be a copper-based conductor. In any case the auxiliary conductor may be protected against damage and/or electrically or against excessive electrical fields by an insulation of its own, if required.

The high voltage power transmission line according to all embodiments can be used in an AC or DC energy transmission system operated at high or medium voltage levels. The high voltage power transmission line can be established by the following, exemplary method comprising the basic steps of
providing a plurality of elongated electrical conductor segments;
providing an elongated tubular electrical insulation device;
transporting the plurality of elongated electrical conductor segments and the electrical insulation device unassembled to a site of installation; and
assembling the plurality of elongated electrical conductor segments and the electrical insulation device on site to form an electrical conductor of the plurality of elongated electrical conductor segments and to form an insulated high voltage power transmission line of the electrical conductor and the tubular electrical insulation device, wherein the step of assembling the plurality of elongated electrical conductor segments and the electrical insulation device comprises inserting the plurality of elongated electrical conductor segments into the prefabricated tubular electrical insulation device.

The site of installation may be the actual location where the power transmission line is to be installed as well as an intermediate assembly site where the power transmission line after the specified transport is prepared for the installation.

The electrical conductor segments and the electrical insulation device can be transported separately, thus, a potential weight limitation for transport (e.g. on a truck) can be avoided. Furthermore, longer lengths of the individual elongated electrical conductor segments and the tubular electrical insulation device can be transported compared to an assembled high voltage power cable segment of corresponding dimensions.

By means of the method according to the present application, the transportation of the inventive high voltage power transmission line segment is facilitated, especially the transportation of a high voltage power transmission line providing both a large cross-section area of the inner electrical conductor and a long continuous transmission line segment length. Thus, by means of the method disclosed herein, an increase in the electric power transmitted by, or the current carrying capability of, a power transmission line, especially a power transmission line for installation on land, e.g. an underground power transmission line, or subsea, is attained by the increase in cross-section area of the inner electrical conductor, with only little impairing the flexibility of the high voltage power transmission line during transportation. Thus, the increase of the cross-section area of the inner electrical conductor attained by the method according to the present invention requires only small reduction of the transmission line segment length for the transportation and thus few additional joints. On the contrary, power transmission line segments having longer lengths can be transported in an efficient manner by means of the method of the present invention. By means of the method according to the present invention, the number of joints can be kept to a minimum, the installation is made more efficient, the installation costs are reduced, and the reliability of the power transmission or distribution system in operation can be increased.

### Brief Description of the Drawings

The present invention will now be described, for exemplary purposes, in more detail by way of schematic embodiments and with reference to the enclosed drawings, in which:
- Fig. 1: is a schematic perspective view of an embodiment of the high voltage power transmission line according to the present invention;
- Fig. 2: is a schematic perspective view of a section of an embodiment of the tubular electrical insulation device of an embodiment of the high voltage power transmission line according to the present invention;
- Fig. 3a: is a schematic cross-section view of an embodiment of a plurality of elongated electrical conductor segments of an embodiment of the high voltage power transmission line according to the present invention;
- Fig. 3b: is a schematic cross-section view of another embodiment of a plurality of elongated electrical conductor segments of an embodiment of the high voltage power transmission line according to the present invention;
- Fig. 4a: is a schematic cross-section view illustrating an embodiment of a plurality of elongated electrical conductor segments before assembly;
- Fig. 4b: is a schematic cross-section view illustrating another embodiment of a plurality of elongated electrical conductor segments before assembly;
- Fig. 5: is a flow chart illustrating aspects of an embodiment of the method according to the present invention;
- Fig. 6: is a schematic view illustrating how the plurality of elongated electrical conductor segments and the tubular electrical insulation device may be stored during transported.
- Fig. 7: is a cross section through a detail of the electrically insulating device according to an example of the present invention.
- Fig. 8: is a schematic perspective view of a power transmission line according to a further example of the invention.

### Detailed Description of Embodiments

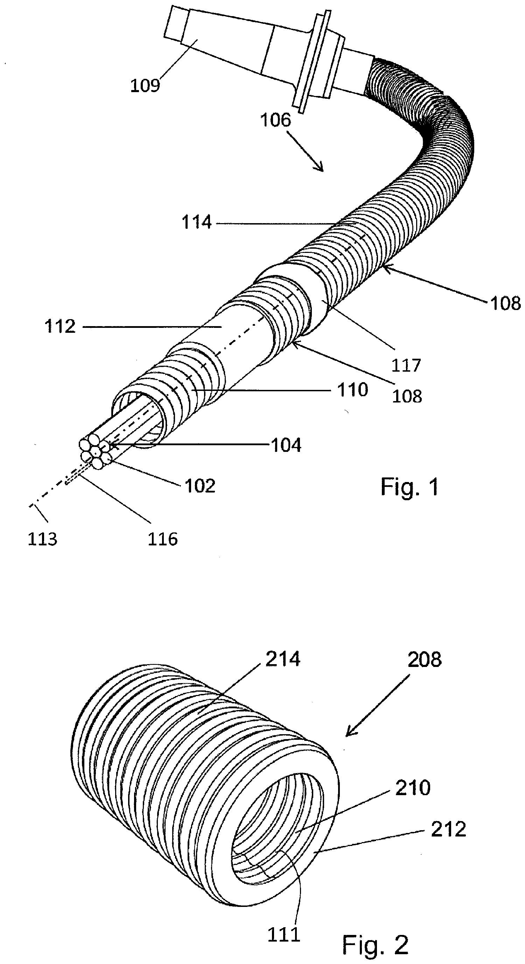

Fig. 1 schematically shows aspects of an embodiment of the high voltage power transmission line 106 according to the present invention. In Fig. 1, which is a partial cut-away view for illustrative purposes, the high voltage power transmission line is assembled and is thus in an assembled state. The high voltage power transmission line comprises a plurality of elongated electrical conductor segments 102 arranged to be placed alongside one another and in electrical contact to one another to form an inner electrical conductor 104 of a high voltage power transmission line 106. By its tubular overall shape the high voltage power transmission line 106 defines a longitudinal axis 113. The high voltage power transmission line 106 may be a high voltage direct current (HVDC) power transmission line or a high voltage alternating current (HVAC) power transmission line. The high voltage power transmission line comprises an elongated tubular electrical insulation device 108 arranged to house and surround the inner electrical conductor 104 formed from the electrical conductor segments 102. An auxiliary conductor 116 for transmitting signals is inserted into the tubular electrical insulation device 108 along with the electrical conductor segments 102.

A joint 117 is provided for jointing, i.e. connecting the conductor segments 102 and the ends of the two neighboring tubular electrical insulation devices 108 facing one another in the direction of the longitudinal axis 113.

Fig. 2 shows a section of another embodiment of the elongated tubular electrical insulation device 208, which may essentially correspond to the electrical insulation device 108 of Fig. 1. It is to be understood that the electrical insulation device 208 of Fig. 2 has a longer length than shown in Fig. 2. The plurality of elongated electrical conductor segments 102 is insertable into the tubular electrical insulation device 108; 208. The plurality of elongated electrical conductor segments 102 and the electrical insulation device 108; 208 are arranged to be transported unassembled to a site of installation. The plurality of elongated electrical conductor segments 102 and the electrical insulation device 108; 208 are arranged to be assembled on site to form the inner electrical conductor 104 of the plurality of elongated electrical conductor segments 102 and to form an insulated high voltage power transmission line 106 of the inner electrical conductor 104 and the electrical insulation device 108; 208. The site of installation is the location where the high voltage power transmission line 106 is to be installed, e.g. on land, such as in the ground or laid in sea in a sub-sea application. Advantageously, the individual electrical conductor segments 102 and the electrical insulation device 108; 208 are flexible for transportation.

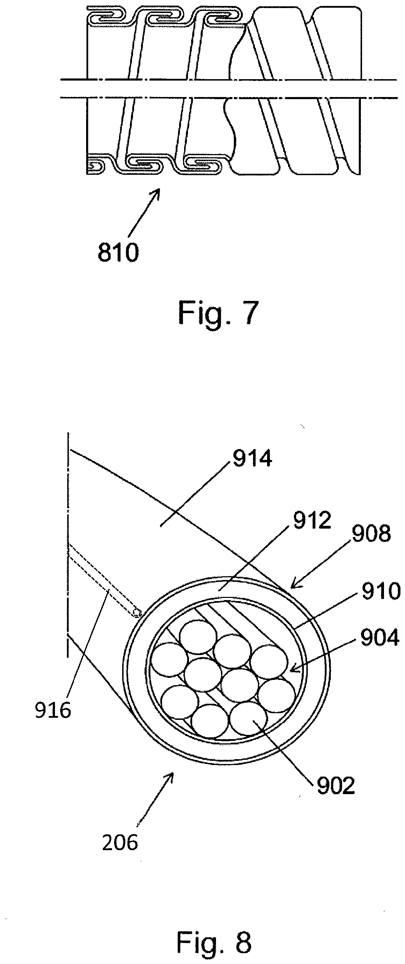

Each electrical insulation device 108; 208 comprises a circumferential electrically conductive inner layer 110; 210 arranged to house and surround the plurality of elongated electrical conductor segments 102, at least one circumferential electrical insulator layer 112; 212 located outside of and surrounding the electrically conductive inner layer 110; 210, and a circumferential electrically conductive outer layer 114; 214 located outside of and surrounding the at least one circumferential electrical insulator layer 112; 212. The electrical insulation device 108, 208 comprises an inner circumferential electrically conductive layer 110 (see fig.1) 210 (see fig. 2) or 810 (see fig. 8) at its inner wall surface 111.

The inner electrically conductive layer 110; 210 is a corrugated tube in the embodiments shown in fig. 1 and fig. 2. The at least one circumferential electrical insulator layer 112; 212 comprises at least one circumferential electrically insulating layer made of a solid dielectric material. The electrically conductive inner and outer layers 110, 114; 210, 214 are arranged to form a protective barrier that protects the at least one circumferential electrical insulator layer 112; 212 from moisture and mechanical abrasion. In general, the electrical insulation device 108; 208 is arranged to electrically insulate the inner electrical conductor 104 housed therein from the exterior.

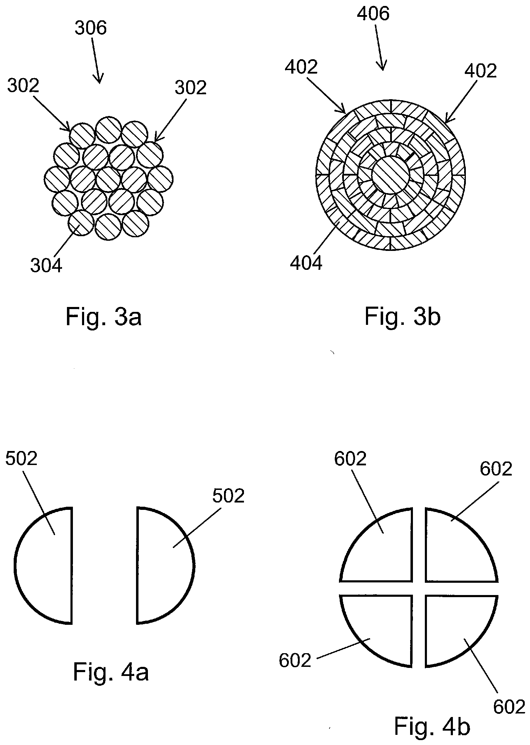

With reference to Figs. 3a-b and 4a-b, a plurality of embodiments of the plurality of elongated electrical conductor segments is schematically illustrated in cross-section. With reference to Figs. 3-ab, each electrical conductor segment 302; 402 may comprise a single electrically conductive strand 304 or a single electrically conductive profile wire 404, or a plurality of electrically conductive strands 304 or a plurality of electrically conductive profile wires 404. Figs. 3a-b schematically illustrate the electrical conductor segments 302; 402 when they have been placed alongside one another and in electrical contact to one another and assembled to an electrical conductor 306; 406. The strands 304 or wires 404 are made of copper or aluminium, or any other suitable electrically conductive material or material composition.

Figs. 4a-b schematically illustrate further embodiments of the plurality of elongated electrical conductor segments.

In the embodiment of Fig. 4a, the plurality of elongated electrical conductor segments 502 comprises two segments 502 arranged to be placed alongside one another and in electrical contact to one another to form an inner electrical conductor of a high voltage power transmission line.

In the embodiment of Fig. 4b, the plurality of elongated electrical conductor segments 602 comprises four segments 602 arranged to be placed alongside one another and in electrical contact to one another to form an inner electrical conductor of a high voltage power transmission line. However, other shapes and numbers of the conductor segments are possible. The plurality of elongated electrical conductor segments may, e.g., be held together by a tape having a longitudinal extension (not shown), if required. In the embodiment shown in fig. 1, the electrical conductor segments are not held together with such a tape. When forming the inner electrical conductor, the plurality of elongated electrical conductor segments may be arranged together alongside one another in an axial direction and in electrical contact to one another without mechanically compacting the electrical conductor segments together in a radial direction.

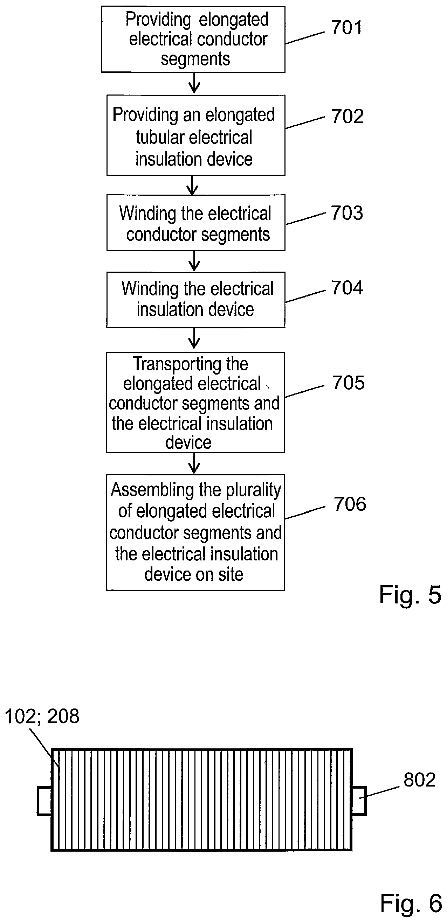

With reference to Figs. 5 and 6, aspects of an embodiment of the method for providing an insulated high voltage power transmission line according to the present invention are schematically illustrated. The embodiment of the method comprises the steps of providing a plurality of elongated electrical conductor segments, at step 701, and providing an elongated tubular electrical insulation device, at step 702. The electrical conductor segments 102; 302; 402; 502; 602 and the electrical insulation device 108; 208 may correspond to the embodiments disclosed above. The plurality of elongated electrical conductor segments may be individually wound in an unassembled state onto at least one drum or roll, at step 703. The electrical insulation device 108; 208 may be individually wound unassembled onto at least one drum or roll 802, at step 704 (see Fig. 6).

Fig. 6 schematically illustrates an insulation device 108; 208 wound onto a drum or roll 802 in a plurality of layers both in the radial direction and in the longitudinal direction of the drum or roll 802. It is to be understood that each electrical conductor segment 102; 302; 402; 502; 602 may be wound in a corresponding way. The plurality of elongated electrical conductor segments and the electrical insulation device are transported unassembled to a site of installation, at step 705. Thus, the plurality of elongated electrical conductor segments and the electrical insulation device may be transported unassembled wound onto drums or rolls 802 as mentioned above. However, the plurality of elongated electrical conductor segments and the electrical insulation device may be transported unassembled without being wound onto drums or rolls 802. The embodiment of the method comprises the step of assembling the plurality of elongated electrical conductor segments and the electrical insulation device on site to form an electrical conductor of the plurality of elongated electrical conductor segments and to form an insulated high voltage power transmission line of the electrical conductor and the tubular electrical insulation device, at step 706. The step of assembling the plurality of elongated electrical conductor segments and the electrical insulation device comprises inserting the plurality of elongated electrical conductor segments into the tubular electrical insulation device. The step of assembling the plurality of elongated electrical conductor segments and the electrical insulation device may comprise placing the plurality of elongated electrical conductor segments alongside one another and in electrical contact to one another to form the electrical conductor. The plurality of elongated electrical conductor segments may be placed alongside one another and in electrical contact to one another to assemble the electrical conductor before being inserted into the tubular electrical insulation device. Alternatively, the plurality of elongated electrical conductor segments may be placed alongside one another and in electrical contact to one another to assemble the electrical conductor inside the tubular electrical insulation device.

As an alternative to provide the inner metal layer of the electrical insulation device as a corrugated profile as depicted in fig. 2, the inner layer may be a strip wound metallic tube. Fig.7 illustrates an example of such a strip wound tube 810.

A further example of the invented insulated high voltage power transmission line 206 is illustrated in fig. 8. In this example, the power transmitted by the transmission line 206 is more than 2 GW. The outer electrically conductive layer 914 serves as the armouring, screen and moisture barrier, but is for clarity reasons depicted in a simplified manner. The inner layer 910 of the insulation is again a corrugated tube or a strip wound tube. The inner layer 910 is arranged in between the outer electrically conductive layer 914 and the insulation layer 912.The outer electrically conductive layer 914 and the insulation layer 912 are applied to the inner layer 910 by way of co-extrusion using the inner layer 910 as the carrier element for the extrusion process.

In an optional embodiment of the electrical insulation device 206 an additional conductor line 916 is provided radially outside the second conductive layer 914 with respect to the longitudinal axis.

The conductor device 904 housed within the insulation device 908 consist in this example of ten conductor segments 902, each being an aluminium strand with a diameter of 52mm. The internal diameter of the inner layer is 231 mm and the external diameter of the insulation device is 307 mm. The fill-factor is about 50 %. The conductive area of the conductor device 904 is about 21 000 mm², and with a current density of 0, 45 A/mm² the current will be 9,4 kA. Transmitting at a voltage of 320 kV thereby results in 3 GW.

When the power transmission line is assembled at the factory the power transmission line will be transported in segments of 309 m. It is wound onto a drum at a bending ratio of 1:10,4. The weight of the aluminium strands is 58 kg/m and the weight of the insulation device is 47 kg/m. The complete segment thus has a weight of about 32 t.

When the power transmission line is assembled on site, the conductor segments and the insulation device are transported on separate drums and the bending ratio is 1:9, 4.

In this case the segments can be longer due to the stronger bending ratio, and the segment length in this case is 681 m. Thereby the number of joints is reduced to less than the half.

In fig.8 the conductor segments all have equal diameter, but the power transmission line may alternative comprise conductor segments of different diameter.

The features of the different embodiments of the apparatus disclosed above may be combined in various possible ways providing further advantageous embodiments. The invention shall not be considered limited to the embodiments illustrated, but can be modified and altered in many ways by one skilled in the art, without departing from the scope of the appended claims.

## Claims

1. A high voltage power transmission line (106, 206) comprising,
at least two tubular electrical insulation devices (108, 208, 908),
at least one nominal conductor segment (102; 302; 402; 502; 602; 902) provided in each of the at least two tubular electrical insulation devices (108, 208, 908),
and a joint (117) for jointing the conductor segments (102; 302; 402; 502; 602; 902) and the ends of two neighboring tubular electrical insulation devices (108, 208, 908),
and at least one power termination (109) for connecting the at least one nominal conductor segment (102; 302; 402; 502; 602; 902) to an electrical connection, and wherein the tubular electrical insulation device (108, 208, 908) comprises an inner circumferential electrically conductive layer (110, 210, 810, 910) at its inner wall surface (111),
**characterized in that** the at least one electrically conductor segment (102; 302; 402; 502; 602; 902) is electrically uninsulated, and that the tubular electrical insulation device (108, 208, 908) is of such insulation quality that it can electrically insulate the at least one electrically uninsulated conductor segment (102, 302, 402, 502, 602, 902) from the exterior of the tubular electrical insulation device (108, 208, 908) once inserted into the tubular electrical insulation device (108, 208, 908), and
**in that** the at least one electrically uninsulated conductor segment (102; 302; 402; 502; 602; 902) is inserted such into the tubular electrical insulation devices (108, 208, 908) that the at least one electrically uninsulated conductor segment (102; 302; 402; 502; 602; 902) is touching the inner circumferential electrically conductive layer (110, 210, 810, 910) at its inner wall surface (111) of the tubular electrical insulation device (108, 208, 908) such that the inner circumferential electrically conductive layer (110, 210, 810, 910) is on the same electric potential as the at least one electrically uninsulated conductor segment (102; 302; 402; 502; 602; 902) in an operating state of the high voltage power transmission line (106,206), and **in that** the inner circumferential electrically conductive layer (110, 210, 810, 910) is dimensionally stable and formed by a corrugated tube (210) or a strip wound tube (810) such that its ring-shaped cross-section is maintained when coiled on the drum for transportation such that the tubular electrical insulation device (108, 208, 908) is flexible in terms of bendability, and that the electrical insulation device (108; 208; 908) comprises at least one circumferentially extending electrical insulator layer (112; 212; 912) located radially outside of the electrically conductive inner layer (110, 210, 810, 910) with respect to a longitudinal axis (113), and a circumferentially extending electrically conductive outer layer (114; 214; 914) located radially outside of the at least one circumferential electrical insulator layer (112; 212; 912).

2. The high voltage power transmission line (160, 206) according to claim 1, **characterized in that** the electrical insulation device (108; 208; 908) is that flexible that its bending radius is in a range of 4 to 20 times the outer diameter of the tubular electrical insulation device (108, 208; 908).

3. The high voltage power transmission line (160, 206) according to claim 1, **characterized in that** the tubular electrical insulation device (108, 208, 908) is produced by extruding the electrical insulator layer (112; 212; 912) onto the electrically conductive inner layer (110, 210) and by extruding the electrically conductive outer layer (114; 214; 914) onto the electrical insulator layer (112; 212; 912).

4. The high voltage power transmission line (160, 206) according to claim 3, **characterized in that** the electrical insulator layer (112; 212; 912) and the electrically conductive outer layer (114; 214; 914) are co-extruded onto the electrically conductive inner layer (110, 210; 810; 910).

5. The high voltage power transmission line (160, 206) according to any one of the previous claims, **characterized in that** the electrically conductive outer layer (110, 114; 210, 214; 914) is made of a metal composition or an electrically conductive polymer.

6. The high voltage power transmission line (160, 206) according to any one of the previous claims, **characterized in that** at least one of the electrically conductive inner layers (110, 210, 810, 910) and outer layers (114; 214) is covered on the outside and/or on the inside with a semiconductive material.

7. The high voltage power transmission line (160, 206) according to claim 1, **characterized in that** an additional conductor line (916) is provided radially outside the electrically conductive outer layer (114; 214; 914) with respect to the longitudinal axis (3).

8. The high voltage power transmission line (160, 206) according to claim 1, **characterized in that** an additional conductor line (916) is provided radially between the inner circumferential electrically conductive layer (110, 210, 810, 910) and the inner wall surface (111), with respect to the longitudinal axis (3).

9. The high voltage power transmission line (160, 206) according to claim 1, **characterized by** an auxiliary conductor (116) for transmitting signals, wherein the auxiliary conductor is inserted into the tubular electrical insulating device (108; 208; 908), too.

10. Use of a high voltage power transmission line (160, 206) according to any one of claims 1 to 9 for transmitting an AC or a DC voltage having more than 300kV.

## Patentansprüche

1. Eine Hochspannungsleistungs-Übertragungsleitung (106, 206), die Folgendes umfasst:
wenigstens zwei rohrförmige Vorrichtungen (108, 208, 908) zur elektrischen Isolation,
wenigstens ein Nenn-Leitersegment (102; 302; 402; 502; 602; 902), das in jeder der wenigstens einen rohrförmigen Vorrichtung (108, 208, 908) zur elektrischen Isolation vorgesehen ist,
eine Verbindung (117) zum Verbinden der Leitersegmente (102; 302; 402; 502; 602; 902) und der Enden von zwei benachbarten rohrförmigen Vorrichtungen (108, 208, 908) und
wenigstens einen Leistungsanschluss (109) zum Verbinden des wenigstens einen Nenn-Leitersegments (102; 302; 402; 502; 602; 902) mit einem elektrischen Anschluss, und
wobei die rohrförmige Vorrichtung (108, 208, 908) zur elektrischen Isolation an ihrer inneren Wandoberfläche (111) eine innere elektrisch leitende Umfangsschicht (110, 210, 810, 910) aufweist,
**dadurch gekennzeichnet, dass** das wenigstens eine elektrisch leitende Segment (102; 302; 402; 502; 602; 902) elektrisch nicht isoliert ist und dass die rohrförmige Vorrichtung (108, 208, 908) zur elektrischen Isolation eine Isolationsqualität hat, derart, dass sie das wenigstens eine elektrisch nicht isolierte Leitersegment (102; 302; 402; 502; 602; 902) gegenüber der äußeren Umgebung der rohrförmigen Vorrichtung (108, 208, 908) zur elektrischen Isolation elektrisch isolieren kann, sobald dieses in die rohrförmige Vorrichtung (108, 208, 908) zur elektrischen Isolation eingeführt ist, und
dass das wenigstens eine elektrisch nicht isolierte Leiterelement (102; 302; 402; 502; 602; 902) so in die rohrförmigen Vorrichtungen (108, 208, 908) zur elektrischen Isolation eingeführt ist, dass das wenigstens eine elektrisch nicht isolierte Leiterelement (102; 302; 402; 502; 602; 902) die innere elektrisch leitende Umfangsschicht (110, 210, 810, 910) an der inneren Wandoberfläche (111) der rohrförmigen Vorrichtung (108, 208, 908) zur elektrischen Isolation berührt, so dass die innere elektrisch leitende Umfangsschicht (110, 210, 810, 910) in einem Betriebszustand der Hochspannungsleistungs-Übertragungsleitung (106, 206) auf dem gleichen elektrischen Potenzial wie das wenigstens eine elektrisch nicht isolierte Leiterelement (102; 302; 402; 502; 602; 902) liegt, und dass die Abmessungen der inneren elektrisch leitenden Umfangsschicht (110, 210, 810, 910) stabil sind und dass sie durch ein gewelltes Rohr (210) oder ein aus einem Streifen gewickeltes Rohr (810) gebildet ist, so dass ihr ringförmiger Querschnitt beibehalten wird, wenn sie auf die Transporttrommel gewickelt wird, so dass die rohrförmige Vorrichtung (108, 208, 908) zur elektrischen Isolation hinsichtlich ihrer Biegsamkeit flexibel ist, und dass die Vorrichtung (108, 208, 908) zur elektrischen Isolation wenigstens eine sich in Umfangsrichtung erstreckende Schicht (112; 212; 912) zur elektrischen Isolation, die sich in Bezug auf eine longitudinale Achse (113) radial außerhalb der elektrisch leitenden inneren Schicht (110, 210, 810, 910) befindet, und eine sich in Umfangsrichtung erstreckende elektrisch leitende äußere Schicht (114; 214; 914), die sich radial außerhalb der wenigstens einen Umfangsschicht (112; 212; 912) zur elektrischen Isolation befindet, aufweist.

2. Die Hochspannungsleistungs-Übertragungsleitung (160, 206) nach Anspruch 1, **dadurch gekennzeichnet, dass** die Vorrichtung (108, 208, 908) zur elektrischen Isolation derart flexibel ist, dass ihr Biegeradius in einem Bereich des 4- bis 20-Fachen des Außendurchmessers der rohrförmigen Vorrichtung (108, 208, 908) zur elektrischen Isolation liegt.

3. Die Hochspannungsleistungs-Übertragungsleitung (160, 206) nach Anspruch 1, **dadurch gekennzeichnet, dass** die rohrförmige Vorrichtung (108, 208, 908) zur elektrischen Isolation durch Strangpressen der Schicht (112; 212; 912) zur elektrischen Isolation auf die elektrisch leitende innere Schicht (110, 210) und durch Strangpressen der elektrisch leitenden äußeren Schicht (114; 214; 914) auf die Schicht (112; 212; 912) zur elektrischen Isolation hergestellt ist.

4. Die Hochspannungsleistungs-Übertragungsleitung (160, 206) nach Anspruch 3, **dadurch gekennzeichnet, dass** die Schicht (112; 212; 912) zur elektrischen Isolation und die elektrisch leitende äußere Schicht (114; 214; 914) gemeinsam auf die elektrisch leitende innere Schicht (110, 210, 810, 910) stranggepresst sind.

5. Die Hochspannungsleistungs-Übertragungsleitung (160, 206) nach einem der vorhergehenden Ansprüche, **dadurch gekennzeichnet, dass** die elektrisch leitende äußere Schicht (110, 114; 210, 214; 914) aus einer metallischen Zusammensetzung oder einem elektrisch leitenden Polymer hergestellt ist.

6. Die Hochspannungsleistungs-Übertragungsleitung (160, 206) nach einem der vorhergehenden Ansprüche, **dadurch gekennzeichnet, dass** die wenigstens eine der elektrisch leitenden inneren Schichten (110, 210, 810, 910) und äußeren Schichten (114; 214) auf der Außenseite und/oder auf der Innenseite mit einem Halbleitermaterial bedeckt sind.

7. Die Hochspannungsleistungs-Übertragungsleitung (160, 206) nach Anspruch 1, **dadurch gekennzeichnet, dass** eine zusätzliche Leitung (916) in Bezug auf die longitudinale Achse (3) radial außerhalb der elektrisch leitenden äußeren Schicht (114; 214; 914) vorgesehen ist.

8. Die Hochspannungsleistungs-Übertragungsleitung (160, 206) nach Anspruch 1, **dadurch gekennzeichnet, dass** eine zusätzliche Leitung (916) in Bezug auf die longitudinale Achse (3) radial zwischen der inneren elektrisch leitenden Umfangsschicht (110, 210, 810, 910) und der inneren Wandoberfläche (111) vorgesehen ist.

9. Die Hochspannungsleistungs-Übertragungsleitung (160, 206) nach Anspruch 1, **gekennzeichnet durch** einen Hilfsleiter (116) für die Übertragung von Signalen, wobei der Hilfsleiter ebenfalls in die rohrförmige Vorrichtung (108, 208, 908) zur elektrischen Isolation eingesetzt ist.

10. Verwendung einer Hochspannungsleistungs-Übertragungsleitung (160, 206) nach einem der Ansprüche 1 bis 9 für die Übertragung einer Wechselspannung oder einer Gleichspannung mit mehr als 300 kV.

## Revendications

1. Une ligne de transmission d'énergie haute tension (106, 206) comprenant,
au moins deux dispositifs d'isolation électrique tubulaires (108, 208, 908),
au moins un segment conducteur nominal (102 ; 302 ; 402 ; 502 ; 602 ; 902) disposé dans chacun desdits au moins deux dispositifs d'isolation électrique tubulaires (108, 208, 908),
et une jonction (117) servant à réunir les segments conducteurs (102 ; 302 ; 402 ; 502 ; 602 ; 902) et les extrémités de deux dispositifs d'isolation électrique tubulaires voisins (108, 208, 908),
et au moins une extrémité d'alimentation (109) servant à relier ledit au moins un segment conducteur nominal (102 ; 302 ; 402 ; 502 ; 602 ; 902) à une connexion électrique, et
dans lequel le dispositif d'isolation électrique tubulaire (108, 208, 908) comprend une couche circonférentielle intérieure électriquement conductrice (110, 210, 810, 910) au niveau de sa surface de paroi intérieure (111),
**caractérisée en ce que** ledit au moins un segment électriquement conducteur (102 ; 302 ; 402 ; 502 ; 602 ; 902) est non isolé électriquement, et **en ce que** le dispositif d'isolation électrique tubulaire (108, 208, 908) a une qualité d'isolation telle qu'il est capable d'isoler électriquement ledit au moins un segment conducteur non isolé électriquement (102, 302, 402, 502, 602, 902) de l'extérieur du dispositif d'isolation électrique tubulaire (108, 208, 908) une fois inséré dans le dispositif d'isolation électrique tubulaire (108, 208, 908), et
**en ce que** ledit au moins un segment conducteur non isolé électriquement (102 ; 302 ; 402 ; 502 ; 602 ; 902) est inséré dans les dispositifs d'isolation électrique tubulaires (108, 208, 908) de telle façon que ledit au moins un segment conducteur non isolé électriquement (102 ; 302 ; 402 ; 502 ; 602 ; 902) touche la couche circonférentielle intérieure électriquement conductrice (110, 210, 810, 910) présente sur la surface de paroi intérieure (111) du dispositif d'isolation électrique tubulaire (108, 208, 908), de telle façon que la couche circonférentielle intérieure électriquement conductrice (110, 210, 810, 910) soit au même potentiel électrique que ledit au moins un segment conducteur non isolé électriquement (102 ; 302 ; 402 ; 502 ; 602 ; 902) dans un état de fonctionnement de la ligne de transmission d'énergie haute tension (106, 206), et **en ce que** la couche circonférentielle intérieure électriquement conductrice (110, 210, 810, 910) a des dimensions stables et est formée par un tube ondulé (210) ou un tube à ruban bobiné (108) qui lui permet de conserver sa section transversale circulaire lorsqu'il est enroulé sur le tambour pour le transport, de sorte que le dispositif d'isolation électrique tubulaire (108, 208, 908) présente une souplesse qui permet de le plier, et que le dispositif d'isolation électrique (108 ; 208 ; 908) comprend au moins une couche d'isolant électrique s'étendant circonférentiellement (112 ; 212 ; 912) située radialement sur l'extérieur de la couche intérieure électriquement conductrice (110, 210, 810, 910) par rapport à un axe longitudinal (113), et une couche extérieure électriquement conductrice s'étendant circonférentiellement (114 ; 214 ; 914) située radialement sur l'extérieur de ladite au moins une couche d'isolant électrique circonférentielle (112 ; 212 ; 912).

2. La ligne de transmission d'énergie haute tension (160, 206) selon la revendication 1, **caractérisée en ce que** la flexibilité du dispositif d'isolation électrique (108 ; 208 ; 908) est telle que son rayon de courbure se situe dans une plage allant de 4 à 20 fois le diamètre extérieur du dispositif d'isolation électrique tubulaire (108, 208 ; 908).

3. La ligne de transmission d'énergie haute tension (160, 206) selon la revendication 1, **caractérisée en ce que** le dispositif d'isolation électrique tubulaire (108, 208, 908) est produit par extrusion de la couche d'isolant électrique (112 ; 212 ; 912) sur la couche intérieure électriquement conductrice (110, 210) et par extrusion de la couche extérieure électriquement conductrice (114 ; 214 ; 914) sur la couche d'isolant électrique (112 ; 212 ; 912).

4. La ligne de transmission d'énergie haute tension (160, 206) selon la revendication 3, **caractérisée en ce que** la couche d'isolant électrique (112 ; 212 ; 912) et la couche extérieure électriquement conductrice (114 ; 214 ; 914) sont extrudées simultanément sur la couche intérieure électriquement conductrice (110, 210 ; 810 ; 910).

5. La ligne de transmission d'énergie haute tension (160, 206) selon l'une quelconque des revendications précédentes, **caractérisée en ce que** la couche extérieure électriquement conductrice (110, 114 ; 210, 214 ; 914) est fabriquée à partir d'une composition métallique ou d'un polymère électriquement conducteur.

6. La ligne de transmission d'énergie haute tension (160, 206) selon l'une quelconque des revendications précédentes, **caractérisée en ce qu'**au moins une des couches intérieures électriquement conductrices (110, 210, 810, 910) et des couches extérieures (114 ; 214) sont recouvertes d'un matériau semi-conducteur sur l'extérieur et/ou sur l'intérieur.

7. La ligne de transmission d'énergie haute tension (160, 206) selon la revendication 1, **caractérisée en ce qu'**une ligne conductrice supplémentaire (916) est disposée radialement sur l'extérieur de la couche extérieure électriquement conductrice (114 ; 214 ; 914) par rapport à l'axe longitudinal (3).

8. La ligne de transmission d'énergie haute tension (160, 206) selon la revendication 1, **caractérisée en ce qu'**une ligne conductrice supplémentaire (916) est disposée radialement entre la couche circonférentielle intérieure électriquement conductrice (110, 210, 810, 910) et la surface de paroi intérieure (111), par rapport à l'axe longitudinal (3).

9. La ligne de transmission d'énergie haute tension (160, 206) selon la revendication 1, **caractérisée par** un conducteur auxiliaire (116) servant à émettre des signaux, le conducteur auxiliaire étant lui aussi inséré dans le dispositif d'isolation électrique tubulaire (108 ; 208 ; 908).

10. Utilisation d'une ligne de transmission d'énergie haute tension (160, 206) selon l'une quelconque des revendications 1 à 9 pour transmettre une tension alternative ou continue de plus de 300 kV.
